# EUROPEAN PATENT APPLICATION

(11) **EP 2 050 558 A1**
(43) Date of publication of application: **22.04.2009**
(21) Application number: 07020292.4
(22) Date of filing: 17.10.2007
(51) Int. Cl.: B29C 63/02, B27N 7/00

(54) **Panel in wood succedaneous**

(71) Applicant: Friul Intagli Industries S.p.A., 33080 Villanova di Prata (PN) (IT)
(72) Inventor: Maccan, Stefano, 33080 Villanovadi Prata (PN) (IT)
(74) Representative: Da Riva, Ermanno

(57) **Abstract**

Panel in wood succedaneous realized in a conglomerate of wood, in slangy language called "OSB", or "OSB" combi-line if it has a plate of MDF on almost one of his sides the panel (P), that can be simply constituted by an element in "OSB", or by the connection of an element (PS) in OSB and a "plate" (L) in MDF, is covered, on one his bigger face with a foil (F) and consequently, leaned the side of the panel (P) on which has been applied the foil (F) on one idoneous work plate, then is applied an ulteriour oil (F) shaped at the end to cover the remaining bigger face and the sides (FI) of the same panel (P), with a known manufacturing process called membran-press, the whole panel (P)/foil (F) will be pressed with said system and will be realized the intimate connection between the various elements (P-F) above mentioned realizing a panel (P) having a monolithic appearance and provided of randomized incisions (I) that are characteristics of the OSB material fundamental contituent of the panel (P) i.e. the manufacturing process membran-press will do in the way that the foils (F) that cover the panel (P) goes back to the surface conformation of said panel (P) reproducing the incicions (I) and giving a particular aesthetic appearance specific of the panel (P) in "OSB".

## Description

The present invention has as object a panel particularly applicable to furnitures and his relative manufactoring proces. Said panel, which front surface has decorative characteristics similar to some irregular and fortuitos incisions, it is obtained doing adhere the covering film to an element obtained in a wood sucecedaneous forming the "base" for the formation of the same panel.

Further to the caratheristics of the panel, in theselves described, there is the same manufactoring proces that is notably important and that can't be disconnected from the same panel obtained with said manufacturing process. Particoularly, the manufactoring process of the panel prevides the utilization of a particular wood succedaneous that is named "OSB" or rather "OSB combiline". Said OSB being realized with rests of the wood working that have pressed previous a their wet with glues and then dryed when brought to the maximum squeezing anc consequently to the maximum relative consistence of the wood conglomerate wood. The OSB is usually considered a less value wood succedaneous and because of this frequently is used for the covering of structures and frames for the cover of the works of construction and/or restructuration of buildings because of his low cost and his notable mechanical carachteristics of resistance and toughness. Said OSB then it will be covered on one of his bigger plane surfaces with a sheet of PVC, or paper, or other laminate foils materials of covering of various kind that can be similar to wood essences or other kinds of elements as with drawings untill to the monochrome kind, then it will be placed with said bigger face provided of an idoneous laminate foil on an idoneous plane then it will be applied on the remaining faces an ulteriour laminate foil always of the same kind, but shaped in the way to cover the correspondent opposite side of the bigger bearing plane surface and all the sides of the panel,then with a known process that is named of membrane-press, it will squeeze the film placed in this manner on the faces of the panel untill to take it to adhere in an intimate manner on the surfaces of the panel and doing in this way in the manner that the film goes back to all the incisons I and the conformations of the OSB panel.

Are all well known all the manufactoring processes for the production of panels in wood succedaneous, they results of various kind and with different production and realization systems that have not able to realize the effects and the characteristics that can be obtained with the panel and his production process consquently espounded.

For a better comprehension of the intrinsic peculiar characteristics of the panel and to illustrate also the advantages that can be obtained with said panel and his manufacturing process, the whole in a preferred realizable conformation and only at a sole exemplifative title and not limitative it is hereconsequently expounded with reference to the enclosed drawings in which:
- The figure 1 showns a panel, with a parallelepipedal conformation, in perspectical wiev of ¾ with a his part "breacked" that showns, in the brocken corner, a possible preferred configuration "sandwich" of the same panel;
- The figure 2 showns a wiev in sectional wiev of it by the line I-I of figure 1 of a first possible panel completely constituted in OSB;
- the figure 3 showns, always with a sectional wiev by the line I-I of figure 1 a second possible panel constituted in OSB with the lower part in MDF;

With references to the enclosed drawings we do to relevate that the common particoulars will be named always with the same numerical references.

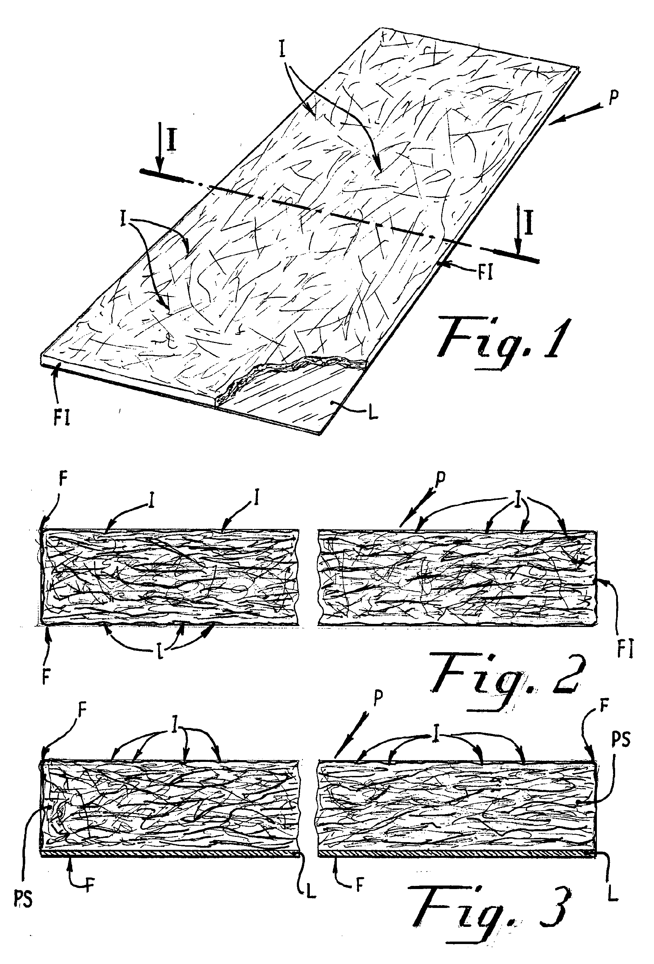

With particoular references to the figure 1 it will be noted a parallelepipedal panel P constituted by a superior part PS, that preferably in his practical application to the furnitures it will goes "at sight" ("a vista"), and it will be realized in "OSB" and that is covered with an idoneous foil F, or film, in "PVC" or similar, that (F) adheres to the bigger surface of the same panel P, and to his sides faces, going back completely to the superficial morphology of the same panel P, i.e. going to adhere to each incisions, trought and/or depression of the bigger surface of the panel P. In his lower side, said panel P, will be formed by a "plate"L, of idoneous thickness, in MDF that will get an ulteriour covering and closure foil F of the ennoblement of the surfaces of the same panel P. It is well understood that the sides FI of the panel P will be covered, them too (FI), by the foil F and precisely by portions of the foil F that are part of the foil F applied on the above surface of the panel P

With references to the figure 2 it wil be noted that the first solution that is obtained with the parallelepipedal panel P, i.e. the panel P will be constituted totally by oly one material, i.e. in "OSB" and it will be totally covered on all his faces, as above expounded, by foils F, or film that can be claimed, in an idoneous material as PVC, paper or similar. Said panel P of figure 2 will be utilizable on both sides, because it has been produced totally in "OSB". The ennoblement cover of the panel P, executed with the foils F, it will be done on both bigger surfaces of the same panel P without that changement of the surface will be done, but this will remain unchanged with the incisions I, the trought and/or the original depressions, because the foils F are going back in a precise manner the surface conformation of the panel P.

Passing to the figure 3 it will be evident a secon solution that is obtained with a second parallelepipedal panel P just putted in evidence in the figure 1. Said second parallelapipedal panel P results differently constructed respect to the first totally in "OSB", in fact on one of the bigger surfaces of the panel P it is applied a "plate" L in MDF as in the figure 1. Often said conformation i.e. one part in "OSB" material and one part in MDF is named "OSB combiline". Usually the "plate" L in MDF is applied in the lower side of the panel P, i.e. on the side that can be called as the lower side in the manufacturing process of covering of the same panel P tht will be consequently expounded.

In said solution shown in figure 3 it will be noted as the surface of the "OSB" side will be as disidered casually irregular, i.e. it will go back to the irregular surface conformation of the same "OSB" material with his incisions, trought and/or superficial irregular depressions of the foil F, or film, in PVC, it will go back to the irregular movement of the surface of said material, while in the lower part, i.e. where is placed the "plate" L in MDF the foil F will be placed perfectly flat and it will go back to the surface of the same plate L in MDF that will be without of interrruptions on it.

Said second solution will be with the characteristics referred to the manufactoring process more simple and fast to obtain it as consequently expounded.

With reference to the figures 1, 2 and 3 it will be possible to describe the manufactoring process of realization of the cover of the panel P with foils F.

At the begin it will be layed, on one of the bigger surfaces (PS) of the parallelepipedal panel (P) a foil F to adhere in a precise way and in the way that at the maximum goes out a little part of it from the perimetral partof the bigger rectangular surface (PS)of the panel P, consequently will be placed the surface so covered on an idoneous workplace. Then it will be applied a foil F on the upper surface not yer covered bearing in mind that the foil F must have the dimensions sufficient, in his development, to the end to cover the bigger surface (PS) of the panel P, but also to cover the sides FI of said panel P. Executed this operations will be applied the known process called membran-press that will squeeze the foils F on all the surfaces of the panel P, giving, at the end of the application of this said process called membran-press, the total covering of the panel P.

In the case of figure 2 it will has an indented and irregular conformation, i.e. not rectilinear of the edges S of the panel P and then the points of connection between the two foils will be irregular and more difficult to "regulate" with the uncut edge process that must be, in this case,done manually, with consequent increase of times and costs, while in the case of figure 3, and also 1 in which it is present the "plate" L in MDF together to OSB, having MDF a conformation more regular and so more rectilinear, it will realize edges S 1 more regular on one of the faces of the panel P and so the uncut edge of the panel will not be necessary anymore or can be faster and automatized and with a consequently economical save of money.

It is clear that both solutions can be utilized by the necessity and the target that are to reach.

Clearly the fact to use a panel in OSB with an irregular superficial movement generate the particular aesthetical effect to realize panels P with always different superficial conformations realizing, in this case, surfaces, no more omogenuous as traditionally happens, but eterogeneous, i.e. similar between them, but never the same one with the other from panel to panel.

It is to add to this that the cover of the panels in OSB can be also realized vith various elements of covering having different colours and/or that reproduces wood essenceses, or something else.

It is well understood that several variations can be applied to the present invention without perhaps to go out from the field of how described and consequently claimed with references to the enclosed drawings and than from the dominion of the present invention.

## Claims

1. Panel in wood succedaneous realized in a conglomerate of wood, in slangy language called "OSB", or "OSB" combi-line if it has a plateof MDF on almost one of his sides, charaterized by the fact that the panel (P), that can be simply constituted by an element in "OSB", or by the connection of an element (PS) in OSB and a "plate" (L) in MDF, is covered, on one his bigger face with a foil (F) and consequently, leaned the the side of the panel (P) on which has been applied the foil (F) on one idoneous work plate, then is applied an ulteriour oil (F) shaped at the end to cover the remaining bigger face and the sides (FI) of the same panel (P), with a known manufacturing process called membran-press, the whole panel (P)/foil (F) will be pessed with said system and will be realized the intimate connection between the various elements (P-F) above mentioned realizing a panel (P) having a monolithic appearance and provided of randomized incisions (I) that are his own characteristics of the OSB material fundamental contituent of the panel (P) i.e. the manufacturing process membran-press will do in the way that the foils (F) that cover the panel (P) goes back to the surface conformation of said panel (P) reproducing the incicions (I) and giving a particoular aesthetic appearance specific of the panel (P) in "OSB"
